# EUROPEAN PATENT SPECIFICATION

(11) **EP 1 538 070 B1**
(45) Date of publication and mention of the grant of the patent: **09.01.2008**
(21) Application number: 04027651.1
(22) Date of filing: 22.11.2004
(51) Int. Cl.: B62D 43/00, B62D 43/04

(54) **A supporting unit for an external spare wheel**
Halterung für aussen angebrachtes Reserverad
Support pour roue de secours externe

(30) Priority: 03.12.2003 IT TO20030969
(43) Date of publication of application: 08.06.2005
(73) Proprietor: Proma S.r.l., 81020 San Nicola la Strada (CE) (IT)
(72) Inventor: Pino, Nicola, 81100 San Leucio (CE) (IT)
(74) Representative: Lotti, Giorgio

(56) References cited:
- US-A1- 2002 040 979
- US-A1- 2002 149 008

## Description

The present invention relates to a supporting unit for an external spare wheel.

In general, as is illustrated schematically in the figure designated by "Prior Art", supporting units of a known type are designed for supporting a spare wheel 2 underneath the floor panel 3 of a motor vehicle and comprise:
- a box-section bracket anchored to the floor panel;
- a bell 5, which can be fitted to the spare wheel 2 and can be moved with respect to the bracket 4 away from and towards a recovery position, in which the bell 5 is set up against the bracket 4;
- a cable 6 for transmitting motion, which passes through the bracket 4 and has one end 7 anchored to the bell 5; and
- a clamping device 8 set between the bracket 4 and the bell 5 for blocking the bell 5 in its recovery position.

An example of the prior art is shown in US 2002 040 979.

The fact that the supporting units of the type described above are set in a position in which they are exposed to atmospheric agents renders them particularly subject to malfunctioning and sticking of the bell above all when the spare wheel, the weight of which ensures a proper descent of the bell, is not present.

The purpose of the present invention is to provide a supporting unit for an external spare wheel which will be more resistant to atmospheric agents and will enable, at the same time, any sticking of the bell to be prevented.

According to the present invention, a supporting unit for an external spare wheel is provided, designed to support the spare wheel underneath the floor panel of a motor vehicle, said supporting unit comprising:
- a box-section bracket anchored to the floor panel;
- a bell, which can be fitted to the spare wheel and can be moved with respect to the bracket away from and towards a recovery position, in which the bell is set up against the bracket;
- a cable for transmitting motion, which passes through the bracket and has one end anchored to the bell; and
- clamping means set between the bracket and the bell for blocking the bell in its recovery position.

The supporting unit is characterized in that it comprises anti-sticking means associated to the box-section bracket, said means in turn comprising an elastic compression element set between the bell and the supporting bracket that can be activated upon de-activation of the clamping device, and a seal element associated to the bell for co-operating with the box-section bracket.

The invention will now be described with reference to the annexed drawings, which illustrate a non-limiting example of embodiment thereof, and in which:
- Figure 1 is a perspective view of a first preferred embodiment of the supporting unit for a spare wheel made according to the present invention;
- Figure 2 is a perspective view, with parts removed for reasons of clarity, of the supporting unit of Figure 1;
- Figure 3 is a side elevation of a second embodiment of the supporting unit for a spare wheel of Figure 1;
- Figure 4 is a perspective view of a third embodiment of the supporting unit for a spare wheel of Figure 1;
- Figure 5 is a side elevation, with parts represented in cross-sectional view and parts removed for reasons of clarity, of the supporting unit of Figure 4; and
- Figure 6 is a side elevation of a fourth preferred embodiment of the supporting unit for a spare wheel of Figure 1.

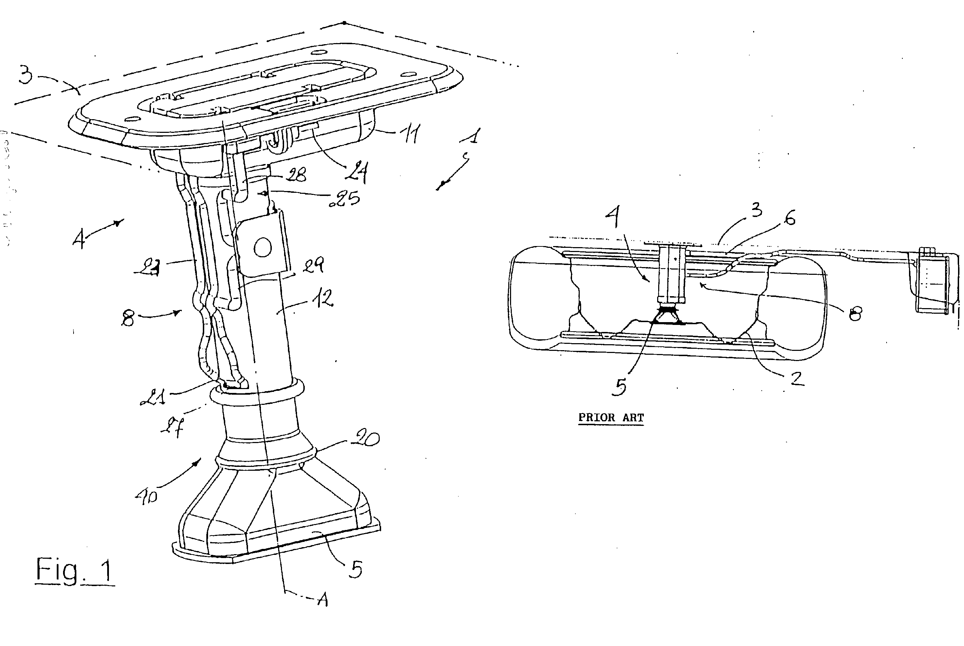

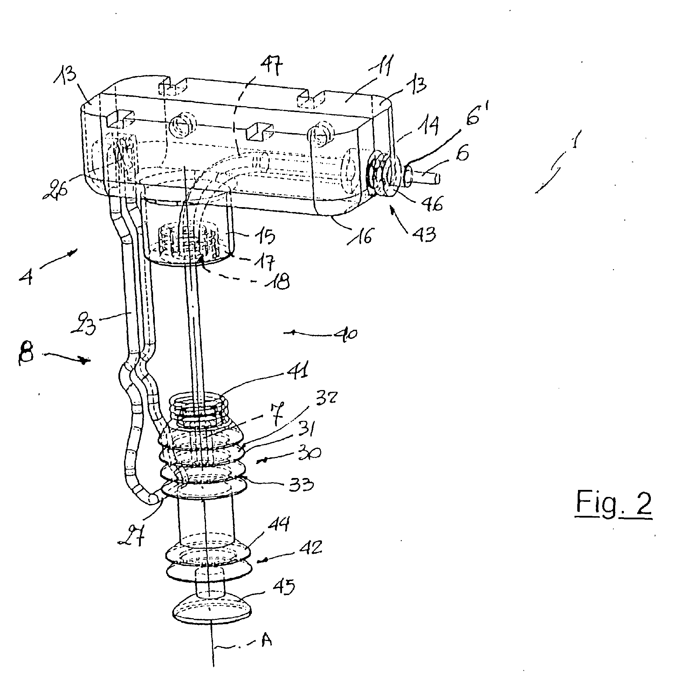

With reference to Figures 1 and 2, and using the same reference numbers as the ones used for designating parts that are the same or similar already described in the introductory part of the description, the reference number 1 designates, as a whole, a supporting unit for an external spare wheel 2.

The unit 1 is designed for supporting the spare wheel 2 underneath the floor panel 3 of a motor vehicle, and comprises:
- a box-section bracket 4 anchored to the floor panel 3;
- a bell 5, which can be fitted to the spare wheel 2 and can be moved with respect to the bracket 4 away from and towards a recovery position, in which the bell 5 is set up against the bracket 4 to clamp the wheel 2 up against the floor panel 3;
- a cable 6 for transmitting motion, which passes through the bracket 4 and has one end 7 fixed to the bell 5; and
- a clamping device 8 set between the bracket 4 and the bell 5 for blocking the bell 5 in its recovery position.

The box-section bracket 4 comprises a substantially parallelepipedal anchoring base 11 and a vertical tubular body 12, which is set transverse to the base 11 and extends from the base 11 on the opposite side of the floor panel 3 with respect to the base 11. In particular, the base 11 is defined by two cup-like half-shells 13 assembled together and has a front hole 14 and a coupling socket 15, which is fixed to a bottom wall 16 of the base 11 itself and has, through one bottom wall 17 thereof a respective through hole 18 for setting the base 11 in communication with the body 12.

The body 12 is coupled on the socket 15 so that it extends along a vertical axis A from the wall 16 and has a bottom mouth portion 20 having a substantially conical shape flared out downwards. The body 12 is moreover provided with a through slit 21, which is transverse to the axis A and is made through the body 12 itself at a certain distance from the mouth portion 20.

The cable 6 for transmitting motion is inserted inside the base 11 through the hole 14 and comes out from the base 11 through the hole 18 to extend along the axis A within the body 12.

The clamping device 8 comprises a snap-action arm 23 hinged on the outside of the bracket 4 in a position corresponding to the base 11 on the opposite side of the hole 14, a further cable 24 for transmitting motion connected to the arm 23 for moving the arm 23 itself away from and towards the clamping position, and an actuating lever 25, which is hinged to the tubular body 12 and is set between the cable 24 and the arm 23 for actuating the arm 23 itself.

The arm 23 is a flexible elastic arm that is designed to bend with respect to a fulcrum element 26 connected to the base 11 and is provided with a coupling end 27, which is set inside the body 12 through the slit 21 and is kept inside the body 12 thanks to the flexibility of the arm 23 itself.

The lever 25 is a first-class lever and is bracketed in a rotatable way on the body 12 with an action arm 28, which extends in the direction of the base 11 and is coupled to the cable 24, and with a resistant arm 29, which extends in the direction of the mouth portion 20 and is engaged with the arm 23.

Finally, the clamping device 8 comprises a shaped bushing 30, which is fixed to the end 7 of the cable 6 and is set between the cable 6 and the bell 5. The bushing 30 is arranged in a slidable way inside the tubular body 12 and has a plurality of annular projections 31, which are arranged in series with respect to the axis A and are designed to be intercepted by the coupling end 27. Each projection 31 is delimited at the top by a respective conical surface 32 and is delimited at the bottom by a respective flat surface 33 transverse to the axis A so as to enable the end 27 to slide on the projection 31 during insertion of the bushing 30 into the body 12 and to be inserted between one projection 31 and the other, so clamping the bushing 30 itself axially.

The unit 1 further comprises an anti-sticking device 40, which is associated to the bracket 4 to prevent any sort of sticking whether of the bell 5 or of the cable 6 due to causes extraneous to the unit itself, such as, for example, infiltration of debris inside the bracket 4 itself, and in order to guarantee movement of the bell 5 away from its own recovery position even in the case where the wheel 2 is not present.

The device 40 comprises a helical spring 41, which is set along the axis A and is designed to be compressed between the bushing 30 and the wall 17 of the socket 15 in order to exert an elastic action of thrust on the bushing 20 itself. The device 40 further comprises two seal elements 42 and 43, which are designed to isolate the bracket 4 from the outside world by means of a sealing action and of which the element 42 is associated to the bell 5, whilst the element 43 is associated to the base 11.

In particular, the element 42 is defined by a shaped bushing, which is set between the bell 5 and the bushing 30 and has two annular projections 44 shaped like a truncated cone, as well as a hemispherical body 45, which are designed to interact with the mouth portion 20 so as to seal the body 12 with the bell 5 set in its recovery position.

The element 43, instead, is set for closing the hole 14 and comprises a cylindrical plug 46 made of a rubbery material, and a flexible guide 47 again made of rubbery material, which is fixed to the plug 46. Both the plug 46 and the guide 47 are traversed by the cable 6 and, whilst the guide 47 extends inside the base 11 from the plug 46 up to the hole 18, the plug 46 also functions as clamping terminal for a sheath 6' of the cable 6.

In use, the unit 1 enables both clamping and support of the wheel 2 underneath the floor panel 3, as well as release of the wheel 2 itself.

In order to enable movement of the cable 6 through the bracket 4, it is initially necessary to release the bushing 30. Consequently, it is necessary to act on the cable 24 in order to bend the arm 23 and disengage the end 27 from the projections 37. At this point, the cable 6 is free, and it is possible to carry out descent of the bell 5 either as a result of the action of the weight of the wheel 2 or, in the absence of the wheel 2, as a result of the elastic action of expansion of the spring 41 in so far as the weight of the bell 5 might not be sufficient either to overcome the sealing action of the element 42 on the mouth portion 20 or to overcome the initial resistance due to the friction between the components or else to possible debris that has accumulated on the outside the mouth portion 20.

Instead, after the bell 5 has possibly been inserted through the wheel 2 and the cable 6 has been recovered by means of a recovering device (not illustrated) set on board the vehicle, the wheel 2 is drawn into the proximity of the vertical axis of the unit 1 and is also raised until the seal element 42 is completely inserted inside the tubular body 12 through the mouth portion 20 and the coupling end 27 is inserted between two projections 31.

From the foregoing description, it is clear that the anti-sticking device 40 prevents both entry of debris inside the box-section bracket 4, so enabling the cable 6 to be moved through an environment that is substantially free from obstacles, and dropping as a result of gravity of the bell 5, notwithstanding the axis of the wheel 2, the weight of which practically enables on every occasion to bring down the bell 5 from the recovery position.

In effect, the position of the unit 1 underneath the floor panel 3 not only exposes the unit 1 to every sort of contaminating agent but it also prevents regular maintenance thereof. As a result, in the absence of the device 40, encrustations are formed inside the unit 1 such as to prevent proper moving of the cable 6. In addition, said encrustations render practically impossible descent of the bell 5 in the absence of the wheel 2, and consequently it is readily understandable how the greater internal cleanliness of the box-section bracket 4 and the elastic action of expansion of the spring 41, once the end 27 has been disengaged from the projections 31, always guarantee descent of the bell 5.

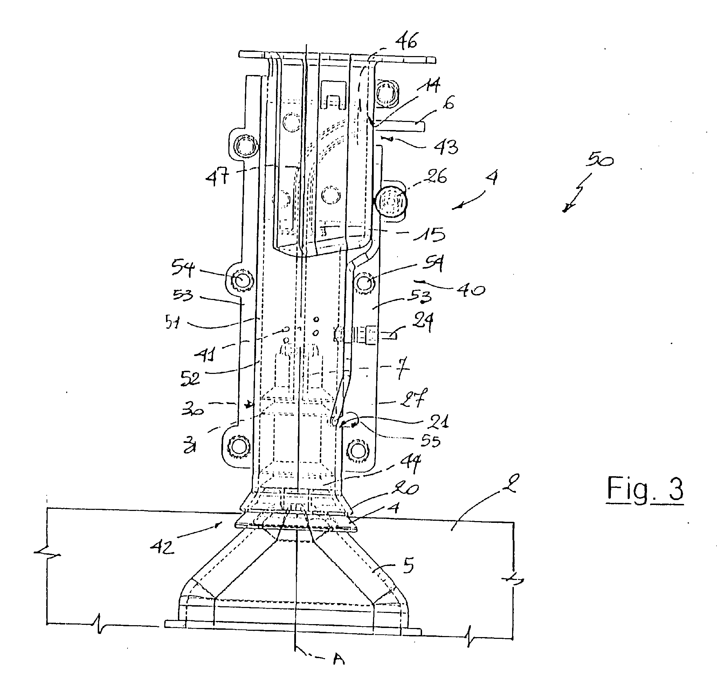

The embodiment illustrated in Figure 3 relates to a unit 50 similar to the unit 1, from which the unit 50 differs in that the base 11 and the body 12 are integrated together in an elongated body 51, which is altogether similar to the body 12, extends along the axis A, and is formed by two shells 52 connected together. In particular, the two shells 52 have respective peripheral edges 53 connected to one another with the aid of a plurality of rivets 54.

The unit 50 moreover differs from the unit 1 in that the arm 23 is directly connected to the cable 24, and the lever 25 is consequently not present. Furthermore, the coupling end 27 is mobile also inside a through slot 55 made through two edges 53.

Operation of the unit 50 is similar to that of the unit 1 and consequently does not call for any further explanation.

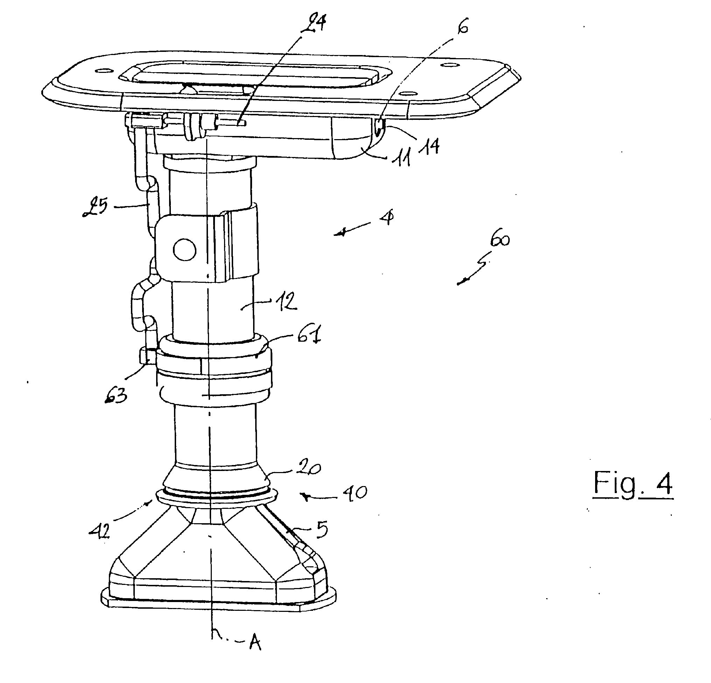

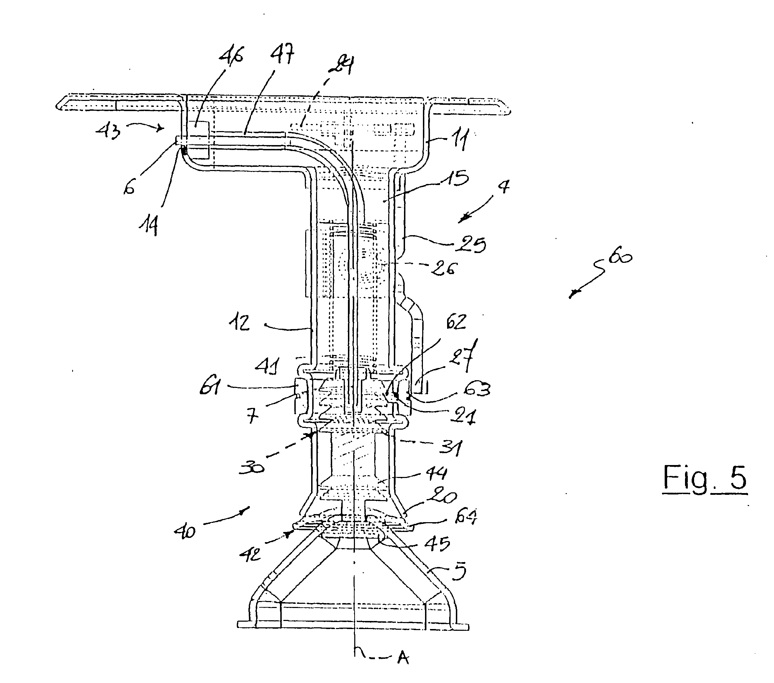

The embodiment illustrated in Figures 4 and 5 relates to a unit 60 similar to the unit 1, from which the unit 60 differs, in the first place, in that it is not provided with the arm 32 and, in the second place, in that the clamping device 8 comprises a sleeve 61, which is set outside the tubular body 12 around the slit 21 and comprises a radial tooth 62 set through the slit 21 itself and in contact with the bushing 30.

The sleeve 61 further comprises a elastic supporting portion 63, which is connected outwards to the arm 29 of the lever 25 and inwards to the tooth 62 in order to enable movement of the tooth 62 away from and towards the projections 31 of the bushing 30.

The device 40 of the unit 60 further comprises, in addition to the lid 45, also a further conical disk 64 made of rubbery material, which is mounted on the opposite side of the lid 45 with respect to the bell 5 and has an outer diameter larger than that of the mouth portion 20 so as to exclude further any possibility of entry of debris into the body 12. The conical disk 64 may advantageously be applied also to the bell 5 of the unit 1.

Also operation of the unit 60 is similar to that of the unit 1 and consequently does not call for any further explanation.

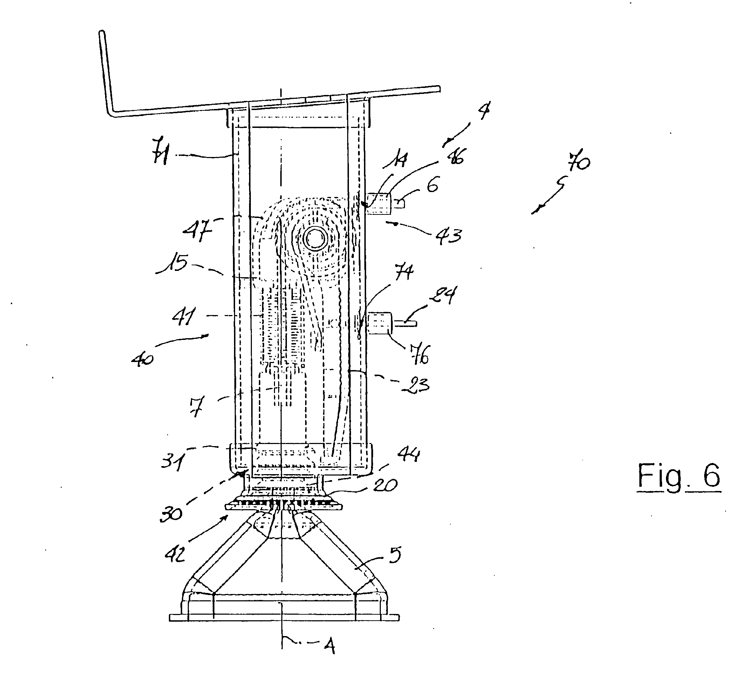

The embodiment illustrated in Figure 6 relates to a unit 70 similar to the unit 1, from which the unit 70 differs, in the first place, in that the base 11 and the body 12 are integrated together in an elongated body 71, which is altogether similar to the body 12, and extends along the axis A. In addition, the arm 23 is not only hinged on the body 71 and directly connected to the cable 24 but is also set inside the body 71 itself.

Consequently, the body 71 is provided not only with the hole 14 for passage of the cable 6 and with the plug 46 set so as to provide hermetic closing of the hole 14 itself but also with a further hole 74 and a further plug 76, which are axially arranged so that they are aligned with the hole 14 and the plug 16 themselves.

Also operation of the unit 70 is similar to that of the unit 1 and consequently does not call for any further explanation.

It is understood that the invention is not limited to the embodiments described and illustrated herein, which are to be considered merely as examples of embodiment of the supporting unit, it being instead possible for said supporting unit to undergo further modifications regarding shapes and arrangement of parts, and constructional and assembly details.

## Claims

1. A supporting unit (1) (50) (60) (70) for an external spare wheel (2), designed to support the spare wheel (2) underneath the floor panel (3) of a motor vehicle, said unit (1) (50) (60) (70) comprising:
- a box-section bracket (4) anchored to the floor panel (3);
- a bell (5), which can be fitted to the spare wheel (2) and can be moved with respect to the bracket (4) away from and towards a recovery position, in which the bell (5) is set up against the bracket (4);
- a cable (6) for transmitting motion, which passes through the bracket (4) and has one end (7) anchored to the bell (5); and
- clamping means (8) set between the bracket (4) and the bell (5) for blocking the bell (5) in its recovery position;
said supporting unit (1)(50)(60)(70) being **characterized in that** it comprises anti-sticking means (40) associated to the box-section bracket (4) and, in turn, comprising an elastic compression element (41) set between the bell (5) and the supporting bracket (4), which can be activated upon de-activation of the clamping means (8), and a seal element (42) associated to the bell (5) for cooperating with the box-section bracket (4).

2. The supporting unit according to Claim 1, **characterized in that** the box-section bracket (4) comprises a vertical tubular support (12)(51)(71) traversed by said cable (6), said seal element (42) being defined by a first shaped bushing, which is fixed to the bell (5) and interacts with the tubular support (12) (51) (71) for closing in a tight way the tubular support (12) (51) (71) itself with the shell (5) set in its recovery position.

3. The supporting unit according to Claim 2, **characterized in that** said box-section bracket (4) comprises an anchorage base (11) set between the floor panel (3) and the tubular support (12); said anti-sticking means (40) comprising an isolating guide (47) extending within the box-section bracket (4) and traversed by said cable.

4. The supporting unit according to Claim 3, **characterized in that** said isolating guide (47) comprises a closing plug (46) mounted on the box-section bracket (4) and traversed by said cable (6).

5. The supporting unit according to Claim 4, **characterized in that** said elastic compression element (41) is defined by a helical spring compressed between the bell (5) and the box-section bracket (4).

6. The supporting unit according to Claim 5, **characterized in that** said clamping means (8) comprise a second shaped bushing (30) anchored to said end (7) of the cable (6) and fixed to said first shaped bushing (42).

7. The supporting unit according to Claim 6, **characterized in that** the second shaped bushing (30) has a plurality of substantially conical radial projections (31).

8. The supporting unit according to Claim 7, **characterized in that** said clamping means (8) comprise a snap-action arm (23) pivoted on the outside of the box-section bracket (4) and interacting with the radial projections (31) through a slit (21) made through said tubular support (12).

9. The supporting unit according to Claim 8, **characterized in that** said clamping means (8) comprise a further cable for transmitting motion (24) connected to the snap-action arm (23) for moving the snap-action arm (23) away from and towards a clamping position, in which the snap-action arm (23) interacts with said second bushing (30).

10. The supporting unit according to Claim 9, **characterized in that** said clamping means (8) comprise a sleeve (61), which is set outside the tubular support (12) and has a radial tooth (62) set in contact with said second bushing (30); the snap-action arm (23) being connected to the sleeve (61) in a position corresponding to the radial tooth (62) to move the radial tooth (62) away from and towards said second bushing (30).

11. The supporting unit according to Claim 9, **characterized in that** said clamping means (8) comprise an actuating lever (25), which is hinged to the tubular support (12) and is set between the further cable for transmitting motion (24) and the snap-action arm (23) to actuate said snap-action arm (23).

12. The supporting unit according to Claim 7, **characterized in that** said clamping means (8) comprise a snap-action arm (23), which is hinged inside the tubular support (12) and interacts directly with the radial projections (31).

13. The supporting unit according to Claim 12, **characterized in that** said clamping means (8) comprise a further cable for transmitting motion (24), which is connected to the snap-action arm (23) to move said snap-action arm (23) away from and towards a clamping position, in which the snap-action arm (23) interacts with said second bushing (30).

14. The supporting unit according to Claim 13, **characterized in that** said anti-sticking means (40) comprise a further isolating plug (76) traversed by said further cable for transmitting motion (6)(24).

## Patentansprüche

1. Trägereinheit (1)(50)(60)(70) für ein externes Reserverad (2), die ausgebildet ist, um das Reserverad (2) unter der Bodenplatte (3) eines Kraftfahrzeugs zu tragen, wobei die Einheit (1) (50) (60) (70) umfasst:
- ein Halterelement (4) mit Kastenprofil, das an der Bodenplatte (3) verankert ist;
- eine Glocke (5), die an dem Reserverad (2) angebracht werden kann und in Bezug auf das Halterelement (4) von einer Ruhestellung weg und zu dieser hin bewegt werden kann, in welcher die Glocke (5) an dem Halterelement (4) angeordnet ist;
- ein Kabel (6) zum Übertragen von Bewegung, das durch das Halterelement (4) verläuft und mit einem Ende (7)' an der Glocke (5) verankert ist; und
- Klemmmittel (8), die zwischen dem Halterelement (4) und der Glocke (5) angeordnet sind, zum Verriegeln der Glocke (5) in ihrer Ruhestellung;
wobei die Trägereinheit (1) (50) (60) (70) **dadurch gekennzeichnet ist, dass** sie Antihaftmittel (40) umfasst, die dem Halterelement (4) mit Kastenprofil zugeordnet sind und ihrerseits ein elastisches Kompressionselement (41), das zwischen der Glocke (5) und dem Halterelement (4) angeordnet ist, welches nach Deaktivierung der Klemmmittel (8) aktiviert werden kann, und ein Dichtelement (42), das der Glocke (5) zugeordnet ist, zum Zusammenwirken mit dem Halterelement (4) mit Kastenprofil umfassen.

2. Trägereinheit nach Anspruch 1, **dadurch gekennzeichnet, dass** das Halterelement (4) mit Kastenprofil einen vertikalen rohrförmigen Träger (12)(51)(71) umfasst, durch welchen das Kabel (6) verläuft, wobei das Dichtelement (42) durch eine erste Profilbuchse definiert ist, die an der Glocke (5) befestigt ist, und mit dem rohrförmigen Träger (12)(51)(71) zum Dichtschließen des rohrförmigen Trägers (12)(51)(71) zusammenwirkt, wobei die Glocke (5) in ihrer Ruhestellung angeordnet ist.

3. Trägereinheit nach Anspruch 2, **dadurch gekennzeichnet, dass** das Halterelement (4) mit Kastenprofil eine Verankerungsbasis (11) umfasst, die zwischen der Bodenplatte (3) und dem rohrförmigen Träger (12) angeordnet ist; wobei die Antihaftmittel (40) eine Isolationsführung (47) umfassen, welche sich innerhalb des Halterelements (4) mit Kastenprofil erstreckt und durch welche das Kabel verläuft.

4. Trägereinheit nach Anspruch 3, **dadurch gekennzeichnet, dass** die Isolationsführung (47) einen Verschlussstopfen (46) umfasst, der an dem Halterelement (4) mit Kastenprofil angebracht ist und durch welchen das Kabel (6) verläuft.

5. Trägereinheit nach Anspruch 4, **dadurch gekennzeichnet, dass** das elastische Kompressionselement (41) durch eine Spiralfeder definiert ist, die zwischen der Glocke (5) und dem Halterelement (4) mit Kastenprofil zusammengedrückt wird.

6. Trägereinheit nach Anspruch 5, **dadurch gekennzeichnet, dass** die Klemmmittel (8) eine zweite Profilbuchse (30) umfassen, die an dem Ende (7) des Kabels (6) verankert ist und an der ersten Profilbuchse (42) befestigt ist.

7. Trägereinheit nach Anspruch 6, **dadurch gekennzeichnet, dass** die zweite Profilbuchse (30) eine Mehrzahl von im Wesentlichen konischen radialen Vorsprüngen (31) aufweist.

8. Trägereinheit nach Anspruch 7, **dadurch gekennzeichnet, dass** die Klemmmittel (8) einen Schnapparm (23) umfassen, der an der Außenseite des Halterelements (4) mit Kastenprofil schwenkbar gelagert ist und mit den radialen Vorsprüngen (31) durch einen Schlitz (21), der durch den rohrförmigen Träger (12) ausgebildet ist, zusammenwirkt.

9. Trägereinheit nach Anspruch 8, **dadurch gekennzeichnet, dass** die Klemmmittel (8) ein weiteres Kabel zum Übertragen von Bewegung (24) umfassen, das mit dem Schnapparm (23) verbunden ist, zum Bewegen des Schnapparms (23) von einer Klemmposition weg und zu dieser hin, in welcher der Schnapparm (23) mit der zweiten Buchse (30) zusammenwirkt.

10. Trägereinheit nach Anspruch 9, **dadurch gekennzeichnet, dass** die Klemmmittel (8) eine Hülse (61) umfassen, die außerhalb des rohrförmigen Trägers (12) angeordnet ist und einen radialen Zahn (62) aufweist, der mit der zweiten Buchse (30) in Kontakt steht; wobei der Schnapparm (23) mit der Hülse (61) in einer Position, die dem radialen Zahn (62) entspricht, verbunden wird, um den radialen Zahn (62) von der zweiten Buchse (30) weg und zu dieser hin zu bewegen.

11. Trägereinheit nach Anspruch 9, **dadurch gekennzeichnet, dass** die Klemmmittel (8) einen Betätigungshebel (25) umfassen, der an dem rohrförmigen Träger (12) angelenkt und zwischen dem weiteren Kabel zum Übertragen von Bewegung (24) und dem Schnapparm (23) angeordnet ist, um den Schnapparm (23) zu betätigen.

12. Trägereinheit nach Anspruch 7, **dadurch gekennzeichnet, dass** die Klemmmittel (8) einen Schnapparm (23) umfassen, der innerhalb der rohrförmigen Trägers (12) angelenkt ist und direkt mit den radialen Vorsprüngen (31) zusammenwirkt.

13. Trägereinheit nach Anspruch 12, **dadurch gekennzeichnet, dass** die Klemmmittel (8) ein weiteres Kabel zum Übertragen von Bewegung (24) umfassen, das mit dem Schnapparm (23) verbunden ist, um den Schnapparm (23) von einer Klemmposition weg und zu dieser hin zu bewegen, in welcher der Schnapparm (23) mit der zweiten Buchse (30) zusammenwirkt.

14. Trägereinheit nach Anspruch 13, **dadurch gekennzeichnet, dass** die Antihaftmittel (40) einen weiteren Isolationsstopfen (76) umfassen, durch welchen das weitere Kabel zum Übertragen von Bewegung (6)(24) verläuft.

## Revendications

1. Unité de rangement (1) (50) (60) (70) pour une roue de secours extérieure (2), conçue pour ranger la roue de secours (2) en dessous du plancher (3) d'un véhicule à moteur, ladite unité (1) (50) (60) (70) comprenant :
- un support en forme de caisson (4) ancré sur le plancher (3) ;
- une cloche (5), qui peut être ajustée sur la roue de secours (2) et peut être déplacée par rapport au support (4) à distance de et vers une position de récupération, dans laquelle ladite cloche (5) est placée contre le support (4) ;
- un câble (6) de transmission de mouvement, qui passe au travers du support (4) et a une extrémité (7) qui est ancrée sur la cloche (5) ; et
- un moyen de serrage (8) agencé entre le support (4) et la cloche (5) pour bloquer ladite cloche (5) dans sa position de récupération ;
ladite unité de rangement (1) (50) (60) (70) étant **caractérisée en ce qu'**elle comprend un moyen anti-coincement (40) associé au support en forme de caisson (4) et, à son tour, comprenant un élément de compression élastique (41) agencé entre la cloche (5) et le support (4), qui peut être activé au moment de la désactivation du moyen de serrage (8), et un élément d'étanchéité (42) associé à la cloche (5) pour coopérer avec le support en forme de caisson (4).

2. Unité de rangement selon la revendication 1, **caractérisée en ce que** le support en forme de caisson (4) comprend un élément de rangement tubulaire vertical (12) (51) (71) traversé par ledit câble (6), ledit élément d'étanchéité (42) étant défini par une première douille profilée, qui est fixée à la cloche (5), et qui interagit avec l'élément de rangement tubulaire (12) (51) (71) pour fermer hermétiquement l'élément de rangement tubulaire (12) (51) (71) lui-même, la cloche (5) étant agencée dans sa position de récupération.

3. Unité de rangement selon la revendication 2, **caractérisée en ce que** le support en forme de caisson (4) comprend une base d'ancrage (11) agencée entre le plancher (3) et l'élément de rangement tubulaire (12) ; ledit moyen anti-coincement (40) comprenant un guide isolant (47) s'étendant à l'intérieur du support en forme de caisson (4) et étant traversé par ledit câble.

4. Unité de rangement selon la revendication 3, **caractérisée en ce que** ledit guide isolant (47) comprend un bouchon de fermeture (46) monté sur le support en forme de caisson (4) et traversé par ledit câble (6).

5. Unité de rangement selon la revendication 4, **caractérisée en ce que** ledit élément de compression élastique (41) est défini par un ressort hélicoïdal comprimé entre la cloche (5) et le support en forme de caisson (4).

6. Unité de rangement selon la revendication 5, **caractérisée en ce que** ledit moyen de serrage (8) comprend une deuxième douille profilée (30) ancrée à ladite extrémité (7) du câble (6) et fixée à ladite première douille profilée (42).

7. Unité de rangement selon la revendication 6, **caractérisée en ce que** la deuxième douille profilée (30) présente une pluralité de saillies radiales sensiblement coniques (31).

8. Unité de rangement selon la revendication 7, **caractérisée en ce que** ledit moyen de serrage (8) comprend un bras à action rapide (23) qui pivote sur l'extérieur du support en forme de caisson (4), et qui interagit avec les saillies radiales (31) à travers une fente traversante (21) pratiquée dans ledit élément de rangement tubulaire (12).

9. Unité de rangement selon la revendication 8, **caractérisée en ce que** ledit moyen de serrage (8) comprend un autre câble de transmission de mouvement (24) relié au bras à action rapide (23) pour déplacer le bras à action rapide (23) à distance dé et vers une position de serrage, dans laquelle le bras à action rapide (23) interagit avec ladite deuxième douille (30).

10. Unité de rangement selon la revendication 9, **caractérisée en ce que** ledit moyen de serrage (8) comprend un manchon (61), qui est agencé à l'extérieur de l'élément de rangement tubulaire (12) et présente une dent radiale (62) agencée en contact avec ladite deuxième douille (30) ; le bras à action rapide (23) étant relié au manchon (61) dans une position correspondant à la dent radiale (62) pour déplacer la dent radiale (62) à distance de et vers ladite deuxième douille (30).

11. Unité de rangement selon la revendication 9, **caractérisée en ce que** ledit moyen de serrage (8) comprend un levier d'actionnement (25), qui est articulé sur l'élément de rangement tubulaire (12), et agencé entre l'autre câble de transmission de mouvement (24) et le bras à action rapide (23), pour actionner ledit bras à action rapide (23).

12. Unité de rangement selon la revendication 7, **caractérisée en ce que** ledit moyen de serrage (8) comprend un bras à action rapide (23), qui est articulé à l'intérieur de l'élément de rangement tubulaire (12), et qui interagit directement avec les saillies radiales (31) .

13. Unité de rangement selon la revendication 12, **caractérisée en ce que** ledit moyen de serrage (8) comprend un autre câble de transmission de mouvement (24), qui est relié au bras à action rapide (23) pour déplacer ledit bras à action rapide (23) à distance de et vers une position de serrage, dans laquelle le bras à action rapide (23) interagit avec ladite deuxième douille (30).

14. Unité de rangement selon la revendication 13, **caractérisée en ce que** ledit moyen anti-coincement (40) comprend un autre bouchon isolant (76) traversé par ledit autre câble de transmission de mouvement (6) (24).
